(19) Europäisches Patentamt

European Patent Office

Office européen des brevets

(11) EP 3 018 626 B1

(12) **EUROPEAN PATENT SPECIFICATION**

(45) Date of publication and mention
of the grant of the patent:
**17.10.2018 Bulletin 2018/42**

(51) Int Cl.:
**G06T 7/194** (2017.01)     **G06T 7/187** (2017.01)
**G06T 7/162** (2017.01)     **G06T 7/155** (2017.01)
**G06T 7/143** (2017.01)

(21) Application number: **15191591.5**

(22) Date of filing: **27.10.2015**

(54) **APPARATUS AND METHOD FOR IMAGE SEGMENTATION**

BILDSEGMENTIERUNGSVORRICHTUNG UND -VERFAHREN

DISPOSITIF ET MÉTHODE DE SEGMENTATION D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2014 IT TO20140907**

(43) Date of publication of application:
**11.05.2016 Bulletin 2016/19**

(73) Proprietor: **Sisvel Technology S.r.l.
10060 None (TO) (IT)**

(72) Inventors:
• **GRANGETTO, Marco
10064 PINEROLO (TO) (IT)**
• **FARID, Muhammad Shahid
10153 TORINO (TO) (IT)**

(74) Representative: **Ferroni, Filippo et al
Metroconsult Genova S.r.l.
Via Palestro, 5/2
16122 Genova (IT)**

(56) References cited:
**CA-A1- 2 886 092**

• **CARSTEN ROTHER ET AL: ""GrabCut"", ACM
TRANSACTIONS ON GRAPHICS, vol. 23, no. 3, 1
August 2004 (2004-08-01) , page 309,
XP055157353, ISSN: 0730-0301, DOI:
10.1145/1015706.1015720**

• **Oliver Rusch ET AL: "Image Segmentation in
Naval Ship Images", , 1 January 2005
(2005-01-01), XP055187584, Retrieved from the
Internet:
URL:http://www.germancolorgroup.de/html/Vo
rtr_05_pdf/b08_rusch.pdf [retrieved on
2015-05-06]**

• **WEIWEI DU ET AL: "Image and Video Matting with
Membership Propagation", 18 November 2007
(2007-11-18), COMPUTER VISION - ACCV 2007;
[LECTURE NOTES IN COMPUTER SCIENCE],
SPRINGER BERLIN HEIDELBERG, BERLIN,
HEIDELBERG, PAGE(S) 590 - 600, XP019082505,
ISBN: 978-3-540-76389-5 * abstract * * section2
Unsupervised Extraction of Homogeneous Color
Regions ***

• **HONGZHE YANG ET AL: "A novel graph cuts
based liver segmentation method", MEDICAL
IMAGE ANALYSIS AND CLINICAL
APPLICATIONS (MIACA), 2010 INTERNATIONAL
CONFERENCE ON, IEEE, PISCATAWAY, NJ,
USA, 10 June 2010 (2010-06-10), pages 50-53,
XP031717679, ISBN: 978-1-4244-8011-1**

• **Y.Y BOYKOV ET AL: "Interactive graph cuts for
optimal boundary & region segmentation of
objects in N-D images", PROCEEDINGS EIGHTH
IEEE INTERNATIONAL CONFERENCE ON
COMPUTER VISION. ICCV 2001, vol. 1, 1 January
2001 (2001-01-01), page 105, XP055157349, DOI:
10.1109/ICCV.2001.937505 ISBN:
978-0-76-951143-6**

• **MICHAEL DONOSER ET AL: "Saliency driven
total variation segmentation", COMPUTER
VISION, 2009 IEEE 12TH INTERNATIONAL
CONFERENCE ON, IEEE, PISCATAWAY, NJ,
USA, 29 September 2009 (2009-09-29), pages
817-824, XP031672626, ISBN: 978-1-4244-4420-5**

**Description**

The present invention relates to an apparatus and a method for segmenting images (preferably natural images), i.e. for partitioning an image into significant regions, so as to simplify and/or change the image representation into something more significant and/or easier to analyze.

Image segmentation is particularly useful for a plurality of activities: making the representation of an image more compact (e.g. by converting an image from a bitmap format into a vectorial format), dividing the image into areas having different characteristics as a first stage of algorithms for optimized recognition or compression of segmented areas (such as, for example, techniques based on the transformation of graphs associated with the image), extracting objects from an image (e.g. separating one or more objects in the foreground from the background of the image) or, more in general, partitioning digital images into sets of points, wherein each set has certain characteristics (e.g. the same colour, the same brightness, or the like). It must be pointed out that the term 'point' will hereafter refer to the basic element of an image, also known as 'pixel'.

As is known, image segmentation methods are widely used in many fields of medicine, heavy industry and automotive industry. In the medical field, in fact, segmentation may be useful for highlighting a particular organ (e.g. lungs or heart) being framed by a radio diagnostic instrument (such as an ecographer) during the different phases of its functional cycle (inspiration/expiration or systole/diastole), so as to determine the maximum volume occupied by said organ and to avoid, in the course of a surgical operation, which may be carried out by laparoscopy (where surgical field vision is extremely limited), any contact with said organ.

Artificial vision systems are often used in the industrial field, which, through the use of a video camera and a method for image segmentation, can identify any manufacturing defects on the surface of a semifinished part, so that it can be decided (either automatically or semiautomatically) whether said part should be rejected or corrected by means of a new machining cycle.

In the automotive industry, image segmentation can be used for identifying, through one or more video cameras, a parking space suitable for parking a vehicle having known dimensions or for supervising and/or making the parking manoeuvre within said space, without hitting any obstacles or other vehicles around said parking space.

In the remote sensing and surveillance field, segmentation techniques allow locating areas and objects of interest. For example, by segmenting and recognizing the road network in aerial optical photographs, the road topology can be extracted.

For compression applications, segmentation can be used for dividing the image into homogenous zones according to certain criteria, e.g. spectral or colour characteristics, texture type, colour uniformity, etc., so that they can be coded in a particularly effective manner by exploiting their characteristics (e.g. by transforming the pixel values from the spatial domain to the frequency domain by means of some kind of transform). For example, for compressing images coming from the desktop of an electronic computer, it is possible to select the different areas corresponding to the windows of the different applications, so as to be able to select the best method for compressing each one of them. For photographic images, it is possible to highlight certain areas whereto higher or lower quality and/or resolution will be applied. In all of the above-mentioned cases, the possibility of dividing an image into homogeneous objects offers the possibility of obtaining better quality or, as an alternative, a higher compression rate compared to the current block-based techniques, which will not necessarily follow the objects' edges.

For photographic applications, the capability of recognizing an object can be used for improving an image during the acquisition or editing stages. The possibility of segmenting an object that diffusely covers an entire image, e.g. a grid, may lead to techniques for improved acquisition (e.g. avoiding to focus a metal grid in front of a scene of interest) or for removing an undesired object during the acquisition phase, e.g. with the help of removal and inpainting techniques.

In all of these applications it is particularly important that segmentation of an object occurs as accurately as possible, i.e. it is important that there are no points classified as not belonging to a partition to which they actually belong (the so-called false negatives), because such classification errors may lead to malfunctions in the process in which the segmentation method is being applied; in fact, such errors may lead to a wrong evaluation of the contour of a lung during the inspiration phase, or to a wrong evaluation of the presence of defects on the surface of a semifinished product, or to a wrong evaluation of a parking space. These wrong evaluations may produce adverse effects, such as damage to the inner wall of a lung caused by a laparoscopic probe positioned too close to said lung, or re-machining a part that had already been properly machined, or hitting another vehicle while parking, or trying to park a vehicle in a parking space that is too small.

American patent US 8,478,034 B2 to INSTITUTE FOR INFORMATION INDUSTRY describes a method for image segmentation that comprises a refining phase wherein, through the use of the graph-cut technique, the classification of the edges of the objects of interest is refined in order to remove any false negatives. However, this approach has some limitations, since it completely relies on the accuracy of a pre-segmentation phase carried out upstream of said phase, thus making the overall segmentation accuracy particularly sensitive to the type of segmentation method applied upstream of said refining phase. Moreover, the preliminary selection phase, which is generally based on the selection of an area having a simple shape, e.g. a rectangle, becomes particularly difficult whenever the object of interest to be contoured and extracted from the image does not have spatial coherence characteristics (contiguous set of points) or is not homogeneous in terms of colour characteristics, or is present in a large portion of the image, as is the case of grids obstructing the vision of a scene of interest.

The scientific publication "Image Segmentation in Naval Ship Images" from O. Rusch et al. present a particular implementation of the iterative GrabCut algorithm named MorphCut in which morphological expansion operations (dilation) are inserted at the end of each iteration and before the next one.

The Canadian patent application CA 2 886 092 A1 to FUJIFILM CORPORATION discloses how to shorten the processing time required when extracting a region from an image using a graph cut method, and reduce the amount of memory used for computation, by means of an image acquisition unit configured to acquire a plurality of CT images from an X-ray CT device and to generate a three-dimensional image. A low-resolution image generation unit converts the resolution of the three-dimensional image into multiple resolutions and generates a low-resolution image. A first extraction unit uses a graph cut method to extract a specific region such as a liver region from the low-resolution image. A contour region setting unit sets the contour of the liver region extracted from the low-resolution image in the three-dimensional image, and sets a contour region including said contour in the three-dimensional image. A second extraction unit extracts the contour of the liver region from the contour region, and extracts the liver region from the three-dimensional image.

The scientific publication "YANG, Hongzhe, et al. A novel graph cuts based liver segmentation method. In: Medical Image Analysis and Clinical Applications (MIACA), 2010 International Conference on. IEEE, 2010. p. 50-53" discloses a liver segmentation method based on the fast marching and graph cuts methods. The algorithm is composed of three main steps: first, rough edge of the liver is extracted from the CT image by fast marching method. Second, hard constrain of the foreground and background, which is used for initial calculation of graph cut, is obtained by mathematical morphology method. Third, based on the former calculation, the graph cuts are utilized to refine the segmentation boundary of the liver.

The present invention provides an apparatus for image segmentation that solves the above-mentioned problems while also allowing segmentation of objects distributed over the entire image or objects that are not easily recognizable from their colour characteristics alone. Furthermore, the present invention also provides a method for image segmentation.

The basic idea of the present invention is to carry out a morphological dilation phase downstream of a pre-segmentation phase, during which points (or zones) of the image are selected which have certain characteristics, prior to a refining phase in which the graph-cut method is applied, wherein said method partitions (groups) the nodes of a graph into one or more classes. This ensures less false negatives resulting from the refining phase, because it increases the amount of information processed by the graph-cut method and takes into account the spatial distribution (in the image) of the points selected during the pre-segmentation phase.

Further advantageous features of the present invention will be set out in the appended claims. These features as well as further advantages of the present invention will become more apparent from the following description of an embodiment thereof as shown in the annexed drawings, which are supplied by way of non-limiting example, wherein:

Fig. 1 is a block diagram of an electronic apparatus according to the invention;
Fig. 2 shows a block diagram of a preferred embodiment of the method for image segmentation according to the invention;
Fig. 3 shows an expansion mask used during the morphological expansion phase of the method of Fig. 2;
Fig. 4 shows a graphic representation of the graph generated and processed during the refining phase of the method of Fig. 2.

In this description, any reference to "*an embodiment*" will indicate that a particular configuration, structure or feature described in regard to the implementation of the invention is comprised in at least one embodiment. Therefore, the phrase "*in an embodiment*" and other similar phrases, which may be present in different parts of this description, will not necessarily be all related to the same embodiment. Furthermore, any particular configuration, structure or feature may be combined in one or more embodiments in any way deemed appropriate. The references below are therefore used only for simplicity's sake, and do not limit the protection scope or extension of the various embodiments.

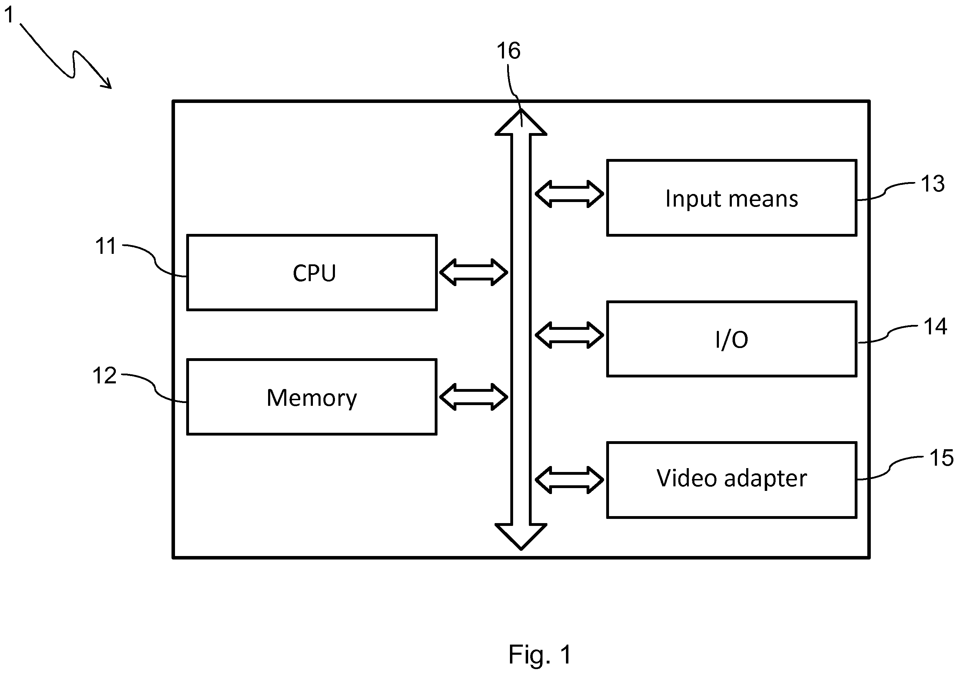

With reference to Fig. 1, an apparatus 1 according to the invention comprises the following components:

- at least one central processing unit 11 (also known as CPU) configured for reading data that represent an image and for executing instructions that implement the method for image segmentation according to the invention, i.e. selecting a set of points (or zones) of an image which have certain characteristics (e.g. colour, luminance, or the like); said characteristics and the definitions thereof will be presented in detail below;

- memory means 12 containing data relating to the image to be segmented and, preferably, the instructions that implement the method according to the invention, wherein the data relating to the image constitute a representation of at least one portion of said image and are preferably in binary format, and wherein said memory means 12 may also contain the result of the execution of the instructions of said method; said result may comprise the selected points and/or the contours of the image areas that contain said selected points, and wherein said contours may be represented as a set of points (e.g. an array containing the coordinates of the points that define one zone) or as mathematical relations defining shapes (e.g. circles, ellipses, polygons, or the like) and advantageously allowing the size of said representation to be reduced;
- entry means 13 configured for acquiring selection information defining the characteristics of the zones of the image that must be selected by the central processing unit 11;
- input/output (I/O) means 14, which may be configured by the central processing unit 11 for reading images to be processed and/or for outputting the processing result; said input/output means may comprise, for example, a USB, Firewire, RS232, IEEE 1284, Ethernet, WiFi adapter or the like;
- a communication bus 16 allowing the exchange of information between the CPU 11, the memory means 12, the entry means 13 and the input/output means 14.

As an alternative to the communication bus 16, the CPU 11, the memory means 12, the entry means 13 and the input/output means 14 may be connected by means of a star architecture.

The apparatus 1 may preferably also comprise a video adapter 15 in signal communication with at least the CPU 11 and the memory 12, wherein said video adapter 15 is adapted to display on visualization means (e.g. an LCD or plasma panel or the like, not shown in the annexed drawings) the image prior to processing and/or the processing results (e.g. highlighting the zones selected by the processing means 1 by means of animated dashed lines superimposed on the image), so as to allow the operator of the apparatus 1 to verify the correctness of the points selected by the central processing unit 11.

It must be pointed out that the visualization means preferably represent the image on a display grid that comprises active elements (e.g. the pixels of a screen) capable of changing colour and/or brightness level according to the information being transmitted to said visualization means from the video adapter 15, so as to allow the viewer to visually perceive the represented information. Furthermore, said active elements preferably have a rectangular shape, although they may also have a circular or ellipsoidal shape or any other shape. The video adapter 15 may be configured for displaying the image to be processed in a manner such that each point of the image is displayed by means of one or more active elements of the display grid. It is also possible to represent more than one point, or portion thereof, by means of one active element. This is the case when the represented image is smaller than the original one (e.g. when a mask of 3x3 points is represented by means of a display grid, or portion thereof, having a size of 2x2 active elements), or when the shape of the active elements is not the one determined for the points of the image.

The man skilled in the art will still be able, however, to configure the video adapter 15 in a manner such that the image will be displayed otherwise by the visualization means, without however departing from the teachings of the present invention.

It must be pointed out that the apparatus 1 may also be included in a television set or a mobile telephone terminal or in another consumer electronic apparatus (e.g. an electronic nocturnal viewer) equipped with image processing functions, which preferably allow interactive editing of images (e.g. acquired by means of a video camera, a photo camera, or other acquisition means).

As is known to those skilled in the art, the central processing unit 11 may actually comprise specially developed integrated circuits, one or more microprocessors, programmable logic circuits (e.g. CPLD, FPGA), and the like. These and other implementation possibilities neither anticipate nor make obvious the teachings of the present invention.

The entry means 13 may preferably comprise interfacing means (e.g. a mouse, a graphic pad, a keyboard, a touchscreen, or the like) and a computer program allowing the user of the apparatus 1 to specify, preferably graphically, the characteristics that the zones to be selected must have; such a program may preferably allow, via a virtual brush (such as those used in photo editing programs) displayed on the visualization means by means of the video adapter 15, highlighting reference samples that allow, after a data extraction phase, identifying the selection information used during a pre-segmentation phase (which will be hereafter described in detail) for selecting the points of the image.

It must be pointed out that the reference samples are representations of points of the image through the visualization means. Therefore, when said reference samples are selected by means of the virtual brush, the CPU 11 must take into account how the video adapter 15 displays the points of the image on the visualization means. In fact, if the image is shown smaller than its original dimensions, i.e. if some active elements represent more than one point of the image, the CPU 11 will have to select the points of the image represented through the active elements that also displayed the virtual brush when said brush was in selection mode; the latter may be activated, for example, by pressing a mouse button, preferably the left one.

It is however possible for the man skilled in the art to configure the CPU 11 in such a way as to select the points of the image differently than described above (e.g. by averaging the values of the points being displayed by a certain active element), without however departing from the teachings of the present invention. It must be pointed out that the entry means 13 may also acquire selection information in a non-interactive manner (e.g. statically); such selection information may include, for example, (predetermined) numeric parameters stored in the memory means 13 or in another memory, so that the CPU 11 will always carry out the segmentation by using the same parameters. This possible variant may be used, for example, in an electronic apparatus for identifying people lost at sea, because the colours of life jackets are well known, and the parameters of the selection information can be defined before the system is put in operation.

As an alternative, said parameters may be determined autonomously through a method for image analysis, wherein said method can, for example, determine the colour and/or the pixel pattern in a given portion of an image (e.g. the centre of the image) and, based on said detected colour and/or pixel pattern, determine the numeric parameters of the selection information. For example, statistical pre-segmentation techniques may be used, such as those based on statistical inference algorithms, or based on edge selection via so-called "snakes" (see for example Prince, Simon JD. Computer vision: models, learning, and inference. Cambridge University Press, 2012., cap. 17), or based on image partitioning into superpixels, i.e. groups of pixels having similar colour characteristics (see for example Achanta, Radhakrishna, et al. "SLIC superpixels compared to state-of-the-art superpixel methods." Pattern Analysis and Machine Intelligence, IEEE Transactions on 34.11 (2012): 2274-2282.). This possible variant may be used, for example, in an electronic apparatus for counting spaced uniform objects (e.g. a herd of animals or the like), since the colour and/or the pixel pattern at the centre of the image (which may correspond, for example, to the focal point) can be used for generating the selection information that will allow the CPU 11 to select those zones of the image which have similar characteristics, so as to advantageously be able to determine the total number of objects by counting the selected zones. As an alternative to or in combination with this solution, other information sources may also be used which are available along the processing chain of an acquisition apparatus; for example, it is possible to locate the parameters of the zone to be pre-segmented by starting from the focal information of a digital camera in order to select the foreground area. Another possible pre-segmentation alternative is to use the depth map of the scene, measured by using appropriate devices (e.g. a laser scanner, a meter measuring the flight time of an infrared ray, or the like), or obtained by means of specific algorithms.

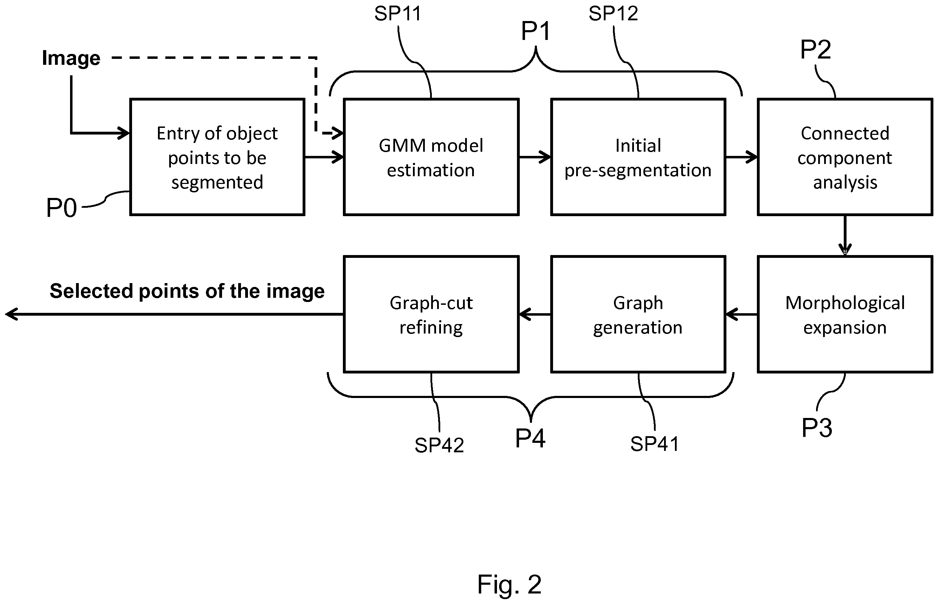

Also with reference to Fig. 2, the following will describe in detail a preferred embodiment of the method for image segmentation according to the invention; said method comprises the following phases:

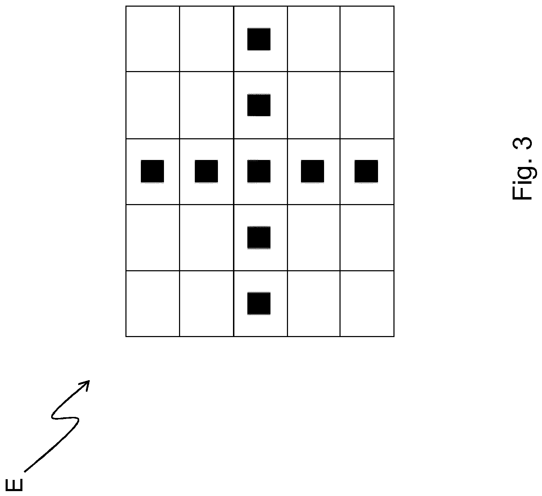

- an entry phase P0 for acquiring, by means of the entry means 13, the selection information that specifies the characteristics that the zones (points) of the image to be selected must have;
- a pre-segmentation phase P1, wherein the processing means 11 generate a model (subphase SP11), preferably a Gaussian mixture model (GMM) based on the selection information acquired in phase P0, and wherein the CPU 11 selects a first set of zones of the image (subphase SP12) based on said model and, optionally, also based on said selection information;
- an analysis phase P2, wherein the processing means 11 analyze the results of the pre-segmentation phase P1 and make a selection, preferably by using the connected component analysis (CCA) method, of a second set of zones of the image, wherein said second set and/or the zones contained in said second set have a smaller size (in numeric and/or area terms) than the first set and/or than the zones contained in said first set selected in phase P1, so as to reduce the probability that the CPU 11 will produce false positives while executing the method of the invention;
- a morphological dilation phase (also referred to as morphological expansion) P3, wherein, by means of the CPU 11, each one of the zones contained in the set generated in phase P2 (or PI) undergoes an expansion of its contours. The morphological dilation operation is defined for binary images and implies the use of a mask called kernel (e.g. like the one shown in Fig. 3), which will be described more in detail below;
- a refining phase P4, wherein, by means of the CPU 11, at least one portion of points of the image and the result of the expansion phase P3 are represented into a graph (subphase SP41 or graph generation phase), and wherein said graph is partitioned by using a graph-cut method (subphase SP42 or graph partitioning phase), so as to reduce the false negatives that erode the contours of the selected zones of the image; the preferred embodiment of said method will be described in detail below.

It must be pointed out that, as already discussed and illustrated in Fig. 2, the entry phase P0 may occur either in the presence of the image (see continuous line), e.g. by selecting parts of the image via a virtual brush moved by means of a mouse or a graphic pad, or in the absence of an image (see dashed line), e.g. when the colour and/or the pattern to be selected are already known before the image is read and/or processed by the CPU 11.

It should also be noted that the analysis phase P2 is optional and might not therefore be carried out by the CPU 11. In fact, not all images might need to reduce false positives. Therefore, the CPU 11 might, once the pre-segmentation phase P1 has been started, begin the execution of the morphological expansion phase P3.

It must be pointed out that all the phases of the method according to the invention can be carried out in an overlapped sequential manner, i.e. the CPU 11 will already start the execution of a new phase of the method when even just a part of the results of a previous phase of the method is available and final (i.e. no longer subject to change). Thus, if the CPU 11 (or more than one CPUs) has (have) the possibility of executing multiple processes at the same time, it will be possible to reduce the time necessary for the CPU 11 to carry out the method on a particular image or set of images.

During the entry phase P0, the CPU 11 is preferably configured for allowing a user to generate the selection information through the use of a virtual brush, which, when controlled by means of a mouse, a graphic pad or a touchscreen interface, allows selecting points and/or drawing lines on those zones of the image which have characteristics similar or equal to those of the points that have to be selected by means of the method according to the invention.

As already partially anticipated while describing the apparatus 1, the method of the invention can be implemented by the hardware of a television set or a mobile telephone terminal or another consumer electronic apparatus (e.g. an electronic nocturnal viewer) equipped with image processing functions.

For simplicity's sake, hereafter it will be assumed that the segmentation method takes into consideration just one object (i.e. just one type of points) at a time, thus reducing the segmentation problem to a binary labelling problem. In this manner, the CPU 11 must decide whether one point (pixel) of the image belongs or not to a particular region on the basis of the selection information.

It should also be noted that the information contained in each point is preferably described by means of the red, green and blue components of the RGB colour space, wherein said components may be stored in a data vector having a dimension of 3.

It will nevertheless be possible for those skilled in the art to use a colour space alternative to the RGB space (e.g. CMYK or another space), without however departing from the teachings of the present invention.

Hereafter the following symbology will be used:

- the letter *I* identifies an image having dimensions *M x N*, generally stored as a matrix of M rows and N columns, wherein each element represents one point in a given colour space (e.g. the RGB triad);
- the letter *P* indicates a set of points containing *n* points, preferably selected by means of the virtual brush;
- the symbol $p_i$ indicates the i-th point belonging to the set $P$ ($p_i \in P$, i = 1, ... , n).

Furthermore, in one possible variant of the method the set P may be replaced with a set *P'* that contains all the elements of the set *P* (defined above) and the *k* points which are closest (k-neighboring points) to each point $p_i$ of the set P, thus obtaining a set *P'* containing $k^2n$ elements. This improves the accuracy of the method according to the invention, thus making it possible to improve the recognition of the edges of those areas (zones) of the image that contain the points to be selected on the basis of the selection information.

As aforementioned, the pre-segmentation phase P1 preferably takes place through a first subphase P11, during which a Gaussian mixture model (hereafter referred to as 'GMM') is created, and a second subphase P12, during which said GMM model is applied in order to classify the various points, *de facto* carrying out an (initial) segmentation to be processed by the CPU 11.

More in detail, the GMM segmentation technique classifies the points of the image I based on statistical properties that, in the method of the invention, correspond to the selection information preferably derived from the points selected in phase P0.

In particular, the GMM model is a probabilistic model that comprises a weighted sum of Gaussian probability density functions; said GMM model (hereafter identified by the letter *G*) is defined in probabilistic terms in the following formula 1.

$$p(x, G) = \sum_{i=1}^{K} \pi_i \, g(x \mid \mu_i \Sigma_i) \qquad (1)$$

In the above formula 1, the symbol x identifies the independent variable of the probability function, the symbols $\pi_i$, $\mu_i$, $\Sigma_i$ represent, respectively, the weight coefficient, the mean, and the covariance of the i-th component of the *K* components that make up the GMM model. For clarity, it must be pointed out that the weight coefficient $\pi_i$ is a scalar, the mean $\mu_i$ is a vector preferably having a size of *3* (which, as a reminder, is the dimension of the data vector of each point of the image in the RGB colour space), while the covariance $\Sigma_i$ is a matrix preferably having a size of *3 x 3* (again, because of the dimension of the data vector of each point of the image in the RGB colour space).

The following formula 2 defines the function g, i.e. a Gaussian probability density of mean $\mu_i$ and covariance $\Sigma_i$.

$$g(x \mid \mu_i, \Sigma_i) = \frac{1}{\sqrt{(2\pi)^3 |\Sigma_i|}} \exp\left(-\frac{1}{2}(x - \mu_i)^T \Sigma_i^{-1}(x - \mu_i)\right) \qquad (2)$$

Therefore, as can be noticed in the above formulae 1 and 2, it is possible to fully define the model *g* by means of three sets (each containing K elements), respectively containing the weight coefficients, the means, and the covariances of each one of the functions that make up the Gaussian probability density function of the model *G* (see also the following formula 3).

$$G := \{\{\pi_1, \pi_2, \ldots, \pi_K\}, \{\mu_1, \mu_2, \ldots, \mu_K\}, \{\Sigma_1, \Sigma_2, \ldots, \Sigma_K\}\} \tag{3}$$

The above-mentioned parameters of the model G can be estimated by using several methods, e.g. one of the following:

- expectation maximization (see A.P. Dempster et al., Maximum likelihood from incomplete data via the em algorithm, Journal of the Royal Statistical Society, Series B (Methodological) (1977) 1-38);
- moment matching (see L.P. Hansen, Large sample properties of generalized method of moments estimators, Econometrica: Journal of the Econometric Society (1982) 1029-1054);
- Markov Chain Monte Carlo (see C.J. Geyer, M. U. M. S. O. Statistics, Markov Chain Monte Carlo Maximum Likelihood, Defense Technical Information Center, 1992);
- maximum likelihood (see R. J. A. Little, D. B. Rubin, Statistical Analysis with Missing Data, 1 st Edition, Wiley Series in Probability and Statistics, Wiley, New York, 1987).

The method according to the invention preferably makes use of the expectation maximization (EM) method, wherein said method is initialized by starting from a GMM model having a number of components equal to $K_0$, and wherein $K_0$, is equal to a number greater than the number of components that the model G will be expected to have. Afterwards, the number of components of the model G is iteratively reduced by means of a minimum description length (MDL) method (see J. Rissanen, A universal prior for integers and estimation by minimum description length, The Annals of Statistics 11 (2) (1983) 416-431, doi:10.1214/aos/1176346150). In practice, the EM method is a method that iteratively calculates the maximum likelihood (ML) in an efficient manner and estimates hidden variables (also referred to as latent variables).

During the initialization phase, the parameters $\pi, \mu, \Sigma$, which are $3K_0$ as a whole, are initialized in a random manner; then the EM algorithm will iteratively improve the estimate for the parameters of the GMM model.

During the subphase SP12, the model G obtained at the end of subphase SP11 is used by the CPU 11 for carrying out a pre-segmentation of the image. With reference to the following formula 4, the parameters of the model *G* are used by the CPU 11 for computing the Mahalanobis distance *d* (see P.C. Mahalanobis, On the generalised distance in statistics, Proceedings National Institute of Science, India 2 (1) (1936) 49-55) of each point of the image *I*.

$$d(x, G) = \sum_{i=1}^{K} \pi_i \sqrt{(x - \mu_i)^T \Sigma_i^{-1} (x - \mu_i)} \tag{4}$$

Furthermore, the CPU 11, after or while computing the distances *d,* carries out a point classification process by comparing each distance value *d* with a threshold value $\tau$ and, if the value *d* of a particular point is smaller than or equal to the threshold $\tau$, said point will be classified as a point contained in a zone to be selected, otherwise said point will be considered as lying outside said zone to be selected. Therefore, the result of the pre-segmentation phase P1 is a bit mask $\Omega(x, y)$ having the same dimensions as the image *I*, wherein said mask is defined as in the formula 5 below.

$$\Omega(x, y) = \begin{cases} 0 & if\ d(I(x, y), G) \le \tau \\ 1 & if\ d(I(x, y), G) > \tau \end{cases} \tag{5}$$

As an alternative, the pre-segmentation phase P1 may be replaced with other methods for raw selection of desired areas capable of determining the bit mask $\Omega(x, y)$ according to the various methods previously described, e.g. by using segmentation techniques, depth maps or other methods for locating the areas to be pre-segmented.

During the analysis phase P2, the CPU 11 analyzes the results of the pre-segmentation phase P1, i.e. the bit mask $\Omega(x, y)$, and makes a selection, preferably by means of the connected component analysis method (CCA), so as to remove the false positives selected by the bit mask $\Omega(x, y)$, wherein the term 'false positives' refers to those points of the image *I* that, although they were selected during the pre-segmentation phase P1, do not actually belong to the zones of the image I to be selected.

The Inventors have observed that false positives are generally found in small groups, whereas true positives (i.e. points correctly classified as belonging to the zones to be selected) are found in relatively large groups connected to one another.

Based on this empirical observation, the CPU 11 is configured for carrying out the following phases during the analysis phase P2:

- identifying, by means of the CCA method, the connected components of the points selected during the pre-segmentation phase P1 (e.g. by using the bit mask $\Omega(x, y)$) and storing information identifying said components into the memory means 12;
- computing the dimension of each one of said components stored in the memory means 12, wherein said dimension is preferably the number of points contained in each connected component;
- removing from the bit mask the points corresponding to those connected components having dimensions smaller than a preset threshold value; for example, in this phase the CPU 11 may invert the bits of the mask $\Omega(x, y)$, at the x,y coordinates that identify the points $I(x, y)$ of a connected component having dimensions smaller than said preset threshold value.

Also with reference to Fig. 3, during phase P3 the CPU 11 computes an expanded bit mask $\Omega_{dil}$, preferably by performing a dilation of the bit mask $\Omega$ (which is the result of phase P2 or PI) by using a kernel E (e.g. by using the Minkowski sum, see formula 6 below), wherein the kernel E is a binary mask preferably having all bits of the central row and of the central column equal to 1 (cross-like shape) and a size equal to, for example, 5 x 5. It must be pointed out that the kernel dimension determines the dilation amplitude, and can be varied depending on the reliability of the preliminary segmentation.

$$\Omega_{dil} = \Omega \oplus E \qquad (6)$$

During the subphase SP41 of the refining phase P4, the CPU 11 first determines the following bit masks:

- a mask of uncertainty points U, i.e. those points of the image I for which one cannot be certain that they belong to the zones to be selected;
- a mask of unselected points B, also referred to as background points;
- a mask of selected points F, also referred to as set of certain points.

In order to determine the mask U, the CPU 11 computes (see also formula 7 below) a binary difference between each element of the expanded bit mask $\Omega_{dil}$ (determined in phase P3) and the corresponding element contained in the bit mask $\Omega$ (determined in phase P1 or P2), i.e. a logical AND operation between each element of the expanded bit mask $\Omega_{dil}$ and the corresponding negated element of the bit mask $\Omega$. Afterwards, the CPU 11 selects those points of the image I which have, in the expanded bit mask $\Omega_{dil}$, the corresponding bit values equal to the logical value 1, and stores said selected points and/or a reference thereof into the memory means 12, thus creating a set of uncertainty points.

$$U = \Omega_{dil} - \Omega \qquad (7)$$

The mask B is computed by applying the logical negation operation (NOT) to each bit of the mask $\Omega_{dil}$, (see also formula 8 below), i.e. it brings the bits having a logical value of 0 to a logical value of 1, and the bits having a logical value of 1 to a logical value of 0. Then the CPU 11 selects those points of the image I which have, in the mask B, the corresponding bit values equal to the logical value 1, and stores said selected points and/or a reference thereof into the memory means 12, thus creating a set of background points.

$$B = Toggle\left(\Omega_{dil}\right) \qquad (8)$$

In order to determine the mask F, the CPU 11 reads the mask $\Omega$ (see also formula 9 below) produced in phase P1 or P2. Afterwards, the CPU 11 selects those points of the image I which have, in the mask F, the corresponding bit values equal to the logical value 1, and stores said selected points and/or a reference thereof into the memory means 12, thus creating a set of selected points.

$$F = \Omega \qquad\qquad (9)$$

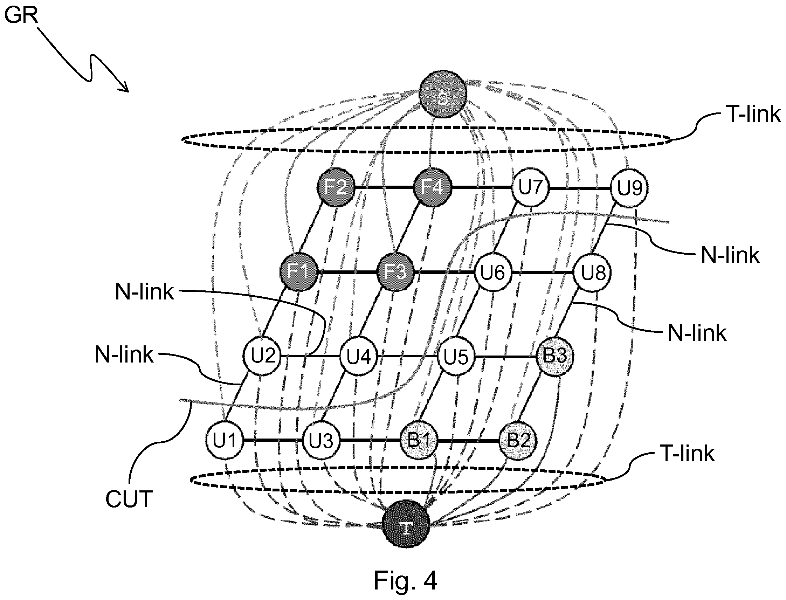

With reference to Fig. 4, while or after computing the masks U,F,B, the CPU 11 generates a graph GR, preferably a weighted one, wherein said graph comprises nodes F1-F4,U1-U9,B1-B3 and arcs, wherein each node represents one of the points of the image *I* classified during the pre-segmentation phase, and wherein each arc connects one node to its neighbour. The weight of each arc is computed by the CPU 11 in a manner such that it represents the similarity between the two nodes connected by it.

The graph GR comprises also two terminal nodes S and T, each one of which is connected to all the other nodes of the graph GR; said terminal nodes S and T represent, respectively, the (generic) class of selected points and the (generic) class of background points. The arcs that connect the terminal nodes S,T to the other nodes are called T-links (or terminal arcs), whereas the arcs that connect each one of the other nodes to a neighbour are called N-links (or neighbouring arcs).

The formula 10 below describes in algebraic terms how the weight $w_N$ of a neighbouring arc (N-link) that connects two nodes u and v is computed by the CPU 11.

$$w_N(u,\, v) = \frac{\alpha}{dist(u,\, v)} \exp\left(-\ \beta\|c_u - c_v\|^2\right) \qquad\qquad (10)$$

where *dist(u, v)* represents the Euclidean distance between the points represented by the nodes *u* and *v*, the symbols $\alpha$ and $\beta$ represent two constants, and the symbols $C_u$ and $C_v$ represent the vectors associated with the colour of the points (e.g. by using the RGB or YUV components) represented by the nodes *u* and *v*, respectively.

As far as the terminal arcs (T-links) are concerned, the formula 10 below describes in algebraic terms how the weight $w_T$ of a T-link arc that connects two nodes u and v is computed by the CPU 11.

$$w_T(u,v) = \begin{cases} 0 & if\ u = S\ \ and\ \ v \in B \\ L & if\ u = S\ \ and\ \ v \in F \\ 0 & if\ u = T\ \ and\ \ v \in F \\ L & if\ u = T\ \ and\ \ v \in B \\ p(v, G_F) & if\ u = S\ \ and\ \ v \in U \\ p(v, G_B) & if\ u = T\ \ and\ \ v \in U \end{cases} \qquad\qquad (11)$$

where the symbol L represents a constant value that is preferably greater than all the other weights assigned to the arcs of the graph GR.

It should be noted that the values of the weights of the arcs that connect the nodes S,T to the nodes representing the points belonging to the sets of selected points F1-F4 (selected during the pre-segmentation phase) or of background points B1-B3 are not changed during the graph partitioning (graph-cut) process, since their assignment to the respective sets has now become static.

Instead, each one of the weights of the terminal arcs (T-links) that connect the terminal node S to the nodes U1-U9, i.e. that represent the points contained in the set of uncertainty points, is preferably computed by means of the likelihood function *p* (see formula 1), which uses, as arguments, an uncertainty point (represented by the node U1-U9 connected to the arc the weight of which is being computed) and a GMM model $G_F$ obtained starting from the points comprised in the set of selected points. In order to improve the segmentation accuracy, it is also possible to update the value of these weights during the graph-cut process GR, progressively updating the model $G_F$ when one or more points are added to the set of selected points.

The weights of the T-link arcs that connect the terminal node T to the nodes U1-U9 are computed in a similar way; in fact, each one of said weights is preferably computed by means of the likelihood function *p* (see formula 1), which uses, as arguments, the uncertainty point (represented by the node connected to the arc the weight of which is being computed) and a GMM model $G_B$ obtained starting from the points comprised in the set of background points. In this case as well, the GMM model $G_B$ may be progressively updated, taking into account the points that are progressively assigned to the set of background points.

During the subphase SP42 of the refining phase P4, the CPU 11 executes instructions that implement a graph-cut method, preferably based on an iterative energy minimization method that uses a max-flow min-cut algorithm (see C. Rother, V. Kolmogorov, A. Blake, "GrabCut": Interactive Foreground Extraction Using Iterated Graph Cuts, ACM Trans. Graph. 23 (3) (2004) 309-314, doi:10.1145/1015706.1015720).

The graph-cut method moves the uncertainty points from the set of uncertainty points to the set of background points or to the set of selected points, thereby allowing removal of the set of uncertainty points and completing the segmentation of the image $I$.

Fig. 4 shows the CUT graphically represented as a line. This choice of the CUT is made by the CPU 11 by executing the graph-cut method and, in the example shown herein, implies moving the points associated with the nodes U2,U4,U7,U9 from the set of uncertainty points to the set of selected points, and moving the points associated with the nodes U1,U3,U5,U6,U8 from the set of uncertainty points to the set of background points.

As aforementioned, this segmentation method can be used within an image coding method; in particular, it can be used in those image coding or compression methods which are based on decomposition of the image to be compressed into homogeneous objects. The use of so-called superpixels has been recently proposed, i.e. connected pixel regions, each one characterized by a certain degree of internal homogeneity, i.e. no color discontinuities and/or edges.

Thanks to such properties, said superpixels can be treated in subsequent coding phases as the fundamental and inseparable elements acted upon by the next coding operations, such as, for example, a domain transformation based on a graph associated with the image. The segmentation technique according to the invention allows the entire image to be segmented without having a user make any selection of a particular area to be segmented, as required by known segmentation techniques; in fact, the intervention of a user required by prior-art techniques makes such techniques wholly inapplicable to the field of image and video compression. The technique proposed herein overcomes this limitation by dividing the image into zones having arbitrary shapes and the desired degree of homogeneity, which can be exploited for the purpose of attaining a more efficient compression.

Of course, the example described so far may be subject to many variations.

In a first variant, the CPU 11 of the apparatus 1 carries out the method for image segmentation (as described above) in an iterative manner on the same image, wherein during each iteration cycle the CPU 11 selects zones (or points) of the same colour in the image to be segmented. Thus, the GMM model generated during the subphase SP11 of the pre-segmentation phase P1 will be more representative of the selection information. This leads to a reduction in the number of false positives and negatives produced by the execution of said method, thereby improving the accuracy of the method according to the invention and the recognition of the edges of the image areas that contain the points to be selected according to the selection information.

In a second variant, the CPU 11 of the apparatus 1 carries out the method for image segmentation as a single iteration on the same image, wherein, during the subphase SP11, the CPU 11 generates a GMM model for each colour specified in the selection information. In this manner, the pre-segmentation made by the GMM model(s) generated during the subphase SP11 will have a smaller number of false positives/negatives than the number of false positives/negatives generated by the method according to the main embodiment, because the individual GMM models are more representative of the selection information. This improves the accuracy of the method according to the invention, thus also improving the recognition of the edges of those areas of the image that contain the points to be selected on the basis of the selection information.

The present description has tackled some of the possible variants, but it will be apparent to the man skilled in the art that other embodiments may also be implemented, wherein some elements may be replaced with other technically equivalent elements. The present invention is not therefore limited to the explanatory examples described herein, but may be subject to many modifications, improvements or replacements of equivalent parts and elements without departing from the basic inventive idea, as set out in the following claims.

**Claims**

1. An image processing apparatus (1) for selecting zones of an image through segmentation, said zones containing sets of image points, comprising

   - at least one processing unit (11) configured to read at least data that encode an image,
   - memory means (12) in signal communication with the processing unit (11), containing at least a part of the data that encode said image,
   - entry means (13) in signal communication with the processing unit (11), configured to

   acquire selection information about points of the image to be selected,
   wherein the entry means (13) is configured to acquire from a user the selection information specifying the characteristics that the zones of the image to be selected must have,

**characterized in that**

the processing unit (11) is configured to perform the following steps:

- a pre-segmentation step (P1), wherein the processing unit (11) generates a model, preferably a Gaussian mixture model (GMM), based on the selection information acquired by the entry means (13), and wherein the processing means (11) selects a first set of zones of the image based on said model;
- a morphological dilation step (P3), wherein, the processing unit (11) dilates morphologically each one of the zones contained in the set generated in the pre-segmentation phase (P1) expanding its contours for generating expanded zones;
- a refining step (P4), wherein the processing unit (11) classifies each image points into one of three sets:

    • a set of uncertainty points (U) containing those points of the image for which it is not possible to establish whether they belong to the zones to be selected, on the basis of a comparison between the points belonging to said first zones and those belonging to said expanded zones,
    • a set of unselected points (B) on the basis of whether the points of the image pertain to said expanded zones, and
    • a set of selected points (F) on the basis of whether the points of the image pertain to said first zones;

- a graph processing step, wherein the processing unit (11) represents said sets of uncertainty points (U), unselected points (B) and selected points (F) in form of a weighted graph (GR), wherein each node of said weighted graph (GR) represents one of the points of the image classified into said three sets (F, U, B), each arc of said weighted graph (GR) connects one node to its neighbors, and each weight of said weighted graph (GR) represents the similarity between the two nodes connected by it, and wherein said processing unit (11) applies a graph-cut method to move the uncertainty points from the set of uncertainty points (U) to the set of unselected points (B) or to the set of selected points (F), thereby allowing removal of the set of uncertainty points (U) and completion of the image segmentation.

2. The apparatus according to claim 1, wherein said processing unit (11) is configured to perform

- an analysis step (P2), wherein the processing unit (11) analyzes the results of the pre-segmentation step (P1) and make a selection, by using the connected component analysis (CCA) method, of a second set of zones of the image, wherein said second set and/or the zones contained in said second set have a smaller size in numeric or area terms than the first set or than the zones contained in said first set selected in the pre-segmentation step (P1), so as to reduce the probability that the processing unit (11) produces false positives, namely points of the image that, although they were selected during the pre-segmentation step (P1), do not actually belong to the zones of the image to be selected;

and wherein during said morphological dilation step (P3), the processing unit (11) dilates morphologically also each one of said second set of zones, and includes them in said expanded zones.

3. The apparatus according to claim 1 or 2, wherein during said pre-segmentation step (P1), said processing unit (11) stores the points pertaining to the first set of zones of the image in a memory means (12) in form of a bit mask ($\Omega$) having the same dimensions as the image, the elements of the mask being set to the logical value 1 if the correspondent points are estimated to pertain to the zones of the image to be selected.

4. The apparatus according to claim 3, wherein the processing unit (11) generates the expanded zones by dilating said bit mask ($\Omega$) through a kernel (E), which is a binary mask, having preferably a cross-like shape, so that said expanded zones form an expanded bit mask ($\Omega_{dil}$) and wherein the processing means (11) computes said mask of uncertainty points (U) as a binary difference between each element of the expanded bit mask ($\Omega_{dil}$) and the corresponding element contained in the bit mask ($\Omega$), namely as a logical AND operation between each element of the expanded bit mask ($\Omega_{dil}$) and the corresponding negated element of the bit mask ($\Omega$).

5. The apparatus according to claim 3, wherein the processing unit (11) computes said mask of unselected points (B) by applying the logical negation operation (NOT) to each element of the expanded mask ($\Omega_{dil}$), namely bringing the bits having a logical value of 0 to a logical value of 1, and the bits having a logical value of 1 to a logical value of 0.

6. The apparatus according to claim 3, wherein the processing unit (11) computes said set of selected points (F) by setting to the logical value 1 only those points of the set whose corresponding elements of said bit mask ($\Omega$) are set to 1.

7. The apparatus according to claim 2, wherein during the analysis step (P2) the processing unit (11) removes from the bit mask ($\Omega$) the elements corresponding to those connected components having dimensions smaller than a preset threshold value.

8. A method for selecting zones of an image through segmentation, said zones containing sets of image points, the method comprising

   - an entry phase (P0) for acquiring from a user, by means of entry means (13), the selection information specifying the characteristics that the zones of the image to be selected must have;

   **characterized in that**
   the method also comprises

   - a pre-segmentation phase (P1), wherein a processing means (11) generates a model, preferably a Gaussian mixture model (GMM), on the basis of the selection information acquired in the entry phase (P0), and wherein the processing means (11) selects a first set of zones of the image on the basis of said model;
   - a morphological dilation phase (P3), wherein, the processing means (11) dilates morphologically each one of the zones contained in the set generated in the pre-segmentation phase (P1) expanding its contours for generating expanded zones;
   - a refining phase (P4), wherein the processing means (11) classifies each image points into one of three sets:

     • a set of uncertainty points (U) containing those points of the image for which it is not possible to establish whether they belong to the zones to be selected, on the basis of a comparison between the points belonging to said first zones and those belonging to said expanded zones,
     • a set of unselected points (B) on the basis of whether the points of the image pertain to said expanded zones, and
     • a set of selected points (F) on the basis of whether the points of the image pertain to said first zones;

   - a graph processing phase, wherein the processing means (11) represent said sets of uncertainty points (U), unselected points (B) and selected points (F) in form of a weighted graph (GR), wherein each node of said weighted graph (GR) represents one of the points of the image classified into said three sets (F, U, B), each arc of said weighted graph (GR) connects one node to its neighbors, and each weight of said weighted graph (GR) represents the similarity between the two nodes connected by it, and said processing means (11) apply a graph-cut method to move the uncertainty points from the set of uncertainty points (U) to the set of unselected points (B) or to the set of selected points (F), thereby allowing removal of the set of uncertainty points (U) and completion of the image segmentation.

9. The method according to claim 8, further comprising

   - an analysis phase (P2), wherein the processing means (11) analyzes the results of the pre-segmentation phase (P1) and make a selection by using the connected component analysis (CCA) method, of a second set of zones of the image, wherein said second set and/or the zones contained in said second set have a smaller size in numeric or area terms than the first set or than the zones contained in said first set selected in the pre-segmentation phase (P1), so as to reduce the probability that the processing means (11) produces false positives, namely points of the image that, although they were selected during the pre-segmentation phase (P1), do not actually belong to the zones of the image to be selected,

   and wherein during said morphological dilation phase (P3), the processing means (11) dilates morphologically also each one of said second set of zones, and includes them in said expanded zones.

10. The method according to claim 8 or 9, wherein during said pre-segmentation phase (P1), said processing unit (11) stores the points pertaining to the first set of zones of the image in a memory means (12) in form of a bit mask ($\Omega$) having the same dimensions as the image, the elements of the mask being set to the logical value 1 if the correspondent points are estimated to pertain to the zones of the image to be selected.

11. The method according to claim 10, wherein the processing unit (11) generates the expanded zones by dilating said bit mask ($\Omega$) through a kernel (E), which is a binary mask, having preferably a cross-like shape, so that said expanded zones form an expanded bit mask ($\Omega_{dil}$) and wherein the processing means (11) computes said mask of uncertainty points (U) as a binary difference between each element of the expanded bit mask ($\Omega_{dil}$) and the corresponding element contained in the bit mask ($\Omega$), namely as a logical AND operation between each element of the expanded bit mask ($\Omega_{dil}$) and the corresponding negated element of the bit mask ($\Omega$).

12. The method according to claim 10, wherein the processing unit (11) computes said mask of unselected points (B) by applying the logical negation operation (NOT) to each element of the expanded mask ($\Omega_{dil}$), namely bringing the bits having a logical value of 0 to a logical value of 1, and the bits having a logical value of 1 to a logical value of 0.

13. The method according to claim 10, wherein the processing unit (11) computes said set of selected points (F) by setting to the logical value 1 only those points of the set whose corresponding elements of said bit mask ($\Omega$) are set to 1.

14. The method according to claim 9, wherein during the analysis step (P2) the processing unit (11) removes from the bit mask ($\Omega$) the elements corresponding to those connected components having dimensions smaller than a preset threshold value.

15. The method according to claim 8, wherein the selection information comprises also points of the image that are located at a preset distance from the selection points.

16. The method according to claim 8, wherein the selection information allows selecting points having different colours, and wherein, during the pre-segmentation phase (P1), a Gaussian mixture model is generated for each colour.

17. The method according to any one of claims 8 to 16, wherein said phases of the method are carried out in an overlapped sequential manner, in the sense that the processing means (11) will already start the execution of a new phase of the method when even just a part of the results of a previous phase of the method is available and final.

18. A computer program product which can be loaded into the memory of an electronic computer, and which comprises portions of software code for executing the phases of the method according to any one of claims 8 to 17.

19. A method for image encoding, comprising a segmentation step wherein an image is segmented into a set of connected pixel regions having a certain degree of homogeneity, wherein said segmentation step is carried out by means of a method for image segmentation according to any one of claims 8 to 17.

**Patentansprüche**

1. Bildverarbeitungsvorrichtung (1) zum Auswählen von Zonen eines Bildes durch Segmentierung, wobei die Zonen Sätze von Bildpunkten enthalten, umfassend

- mindestens eine Verarbeitungseinheit (11), die eingerichtet ist, zumindest Daten zu lesen, die ein Bild kodieren,
- Speichermittel (12) in Signalkommunikation mit der Verarbeitungseinheit (11), das zumindest einen Teil der Daten umfasst, die das Bild kodieren,
- Eingabemittel (13) in Signalkommunikation mit der Verarbeitungseinheit (11), das eingerichtet ist, Auswahlinformationen über Punkte des auszuwählenden Bildes zu erfassen,

wobei das Eingabemittel (13) eingerichtet ist, von einem Benutzer die Auswahlinformationen, die Charakteristiken spezifizieren, welche die Zonen des auszuwählenden Bildes haben müssen, zu erfassen,
**dadurch gekennzeichnet, dass**
die Verarbeitungseinheit (11) eingerichtet ist, die folgenden Schritte auszuführen:

- einen Vorsegmentierungsschritt (P1), in dem die Verarbeitungseinheit (11) ein Modell erzeugt, vorzugsweise ein Gaußsches Mischmodell (GMM), basierend auf den Auswahlinformationen, die durch das Eingabemittel (13) erfasst wurden, und wobei das Verarbeitungsmittel (11) einen ersten Satz von Zonen des Bildes basierend auf dem Modell auswählt;
- ein morphologischer Dilationsschritt (P3), in dem die Verarbeitungseinheit (11) morphologisch jede der Zonen erweitert, die in dem Satz enthalten sind, der in der Vorsegmentierungsphase (P1) erzeugt wurde, Expandieren seiner Konturen zum Erzeugen expandierter Zonen;
- einen Verfeinerungsschritt (P4), in dem die Verarbeitungseinheit (11) jeden Bildpunkt in einen der drei Sätze klassifiziert:

• einen Satz von unsicheren Punkten (U), die solche Punkte des Bildes enthalten, für die es nicht möglich ist, festzulegen, ob sie zur ausgewählten Zone gehören, basierend auf einem Vergleich zwischen den Punkten, die zur ersten Zone gehören und solchen, die zur expandierten Zone gehören,
• ein Satz unausgewählter Punkte (B) basierend darauf, ob die Punkte des Bilds zur expandierten Zone gehören, und
• einen Satz von ausgewählten Punkten (F) basierend darauf, ob die Punkte des Bildes zur ersten Zone gehören;

- einen Grafikverarbeitungsschritt, in dem die Verarbeitungseinheit (11) die Sätze unsicherer Punkte (U), unausgewählter Punkte (B) und ausgewählter Punkte (F) in Form eines gewichteten Graphen (GR) darstellt, wobei jeder Knoten des gewichteten Graphen (GR) einen der Punkte des Bildes, das in die drei Sätze (F, U, B) klassifiziert ist, darstellt, jeder Bogen des gewichteten Graphen (GR) einen Knoten mit seinem Nachbar verbindet und jede Gewichtung des gewichteten Graphen (GR) die Gleichartigkeit zwischen den zwei Knoten, die dadurch verbunden sind, darstellt, und wobei die Verarbeitungseinheit (11) ein Grafikschnittverfahren anwendet, um die unsicheren Punkte vom Satz der unsicheren Punkte (U) zum Satz der unausgewählten Punkte (B) oder zum Satz der ausgewählten Punkte (F) zu bewegen, um dadurch ein Entfernen des Satzes der unsicheren Punkte (U) und eine Komplettierung der Bildsegmentierung zu erlauben.

2. Vorrichtung nach Anspruch 1, wobei die Verarbeitungseinheit (11) eingerichtet ist, auszuführen

- einen Analyseschritt (P2), in dem die Verarbeitungseinheit (11) das Ergebnis des Vorsegmentierungsschritts (P1) analysiert und eine Auswahl ausführt, durch Verwenden des verbundenen Komponentenanalyseverfahrens (CCA) eines zweiten Satzes von Zonen des Bildes, wobei der zweite Satz und/oder die Zonen, die in dem zweiten Satz enthalten sind, eine geringere Größe in numerischer Hinsicht oder Flächenhinsicht enthalten als der erste Satz oder als die Zonen, die im ersten Satz, der im Vorsegmentierungsschritt (P1) ausgewählt wurde, enthalten sind, um die Wahrscheinlichkeit zu reduzieren, dass die Verarbeitungseinheit (11) falsche Positive erzeugt, nämlich Punkte des Bildes, die, obwohl sie während des Vorsegmentierungsschritts (P1) ausgewählt wurden, nicht tatsächlich zur Zone des ausgewählten Bildes gehören;

und wobei die Verarbeitungseinheit (11) morphologisch während des morphologischen Dilationsschritts (P3) auch jede der zweiten Sätze von Zonen erweitert und diese in die expandierten Zonen einfügt.

3. Vorrichtung nach Anspruch 1 oder 2, wobei während des Vorsegmentierungsschritts (P1) die Verarbeitungseinheit (11) die Punkte, die zum ersten Satz von Zonen des Bildes gehören, in einem Speichermittel (12) in Form einer Bitmaske ($\Omega$) speichert, die die gleichen Dimensionen wie das Bild aufweist, wobei die Elemente der Maske auf den logischen Wert 1 gesetzt werden, wenn erwartet wird, dass der entsprechende Punkt zur Zone des ausgewählten Bildes gehört.

4. Vorrichtung nach Anspruch 3, wobei die Verarbeitungseinheit (11) die expandierten Zonen durch Erweiterung der Bitmaske ($\Omega$) durch einen Kern (E) erzeugt, der eine binäre Maske ist und vorzugsweise eine kreuzartige Form aufweist, sodass die expandierten Zonen eine expandierte Bitmaske ($\Omega_{dil}$) bilden, und wobei das Verarbeitungsmittel (11) die Maske unsicherer Punkte (U) als eine binäre Differenz zwischen jedem Element der expandierten Bitmaske ($\Omega_{dil}$) und dem entsprechenden Element in der Bitmaske ($\Omega$) berechnet, nämlich als logische UND-Operation zwischen jedem Element der expandierten Bitmaske ($\Omega_{dil}$) und dem entsprechenden negativen Element der Bitmaske ($\Omega$).

5. Vorrichtung nach Anspruch 3, wobei die Verarbeitungseinheit (11) die Maske der unausgewählten Punkte (B) durch Anwenden der logischen Negationsoperation (NOT) auf jedes Element der expandierten Maske ($\Omega_{dil}$) berechnet, nämlich das Bringen der Bits, die einen logischen Wert von 0 haben, auf einen logischen Wert von 1 und der Bits, die einen logischen Wert von 1 haben, auf einen logischen Wert von 0.

6. Vorrichtung nach Anspruch 3, wobei die Verarbeitungseinheit (11) den Satz von ausgewählten Punkten (F) durch Setzen des logischen Werts 1 nur für die Punkte des Satzes, deren entsprechendes Element der Bitmaske ($\Omega$) auf 1 gesetzt ist, berechnet.

7. Vorrichtung nach Anspruch 2, wobei während des Analyseschritts (P2) die Verarbeitungseinheit von der Bitmaske ($\Omega$) die Elemente entfernt, die denen entsprechen, die mit Komponenten, die kleinere Dimensionen als ein vorbestimmter Schwellenwert haben, verbunden sind.

8. Verfahren zum Auswählen von Zonen eines Bildes durch Segmentierung, wobei die Zonen Sätze von Bildpunkten enthalten, wobei das Verfahren umfasst

   - eine Eingangsphase (P0) zum Erfassen der Auswahlinformationen, die Charakteristiken spezifizieren, welche die Zonen des auszuwählenden Bildes haben müssen, mittels Eingabemitteln (13) von einem Benutzer;

   **dadurch gekennzeichnet, dass**
   das Verfahren außerdem umfasst:

   - eine Vorsegmentierungsphase (P1), in der die Verarbeitungseinheit (11) ein Modell erzeugt, vorzugsweise ein Gaußsches Mischmodell (GMM), basierend auf den Auswahlinformationen, die in der Eingangsphase (P0) erfasst wurden, und wobei das Verarbeitungsmittel (11) einen ersten Satz von Zonen des Bildes basierend auf dem Modell auswählt;
   - eine morphologische Dilationsphase (P3), in der die Verarbeitungseinheit (11) morphologisch jede der Zonen erweitert, die in dem Satz enthalten sind, der in der Vorsegmentierungsphase (P1) erzeugt wurde, Expandieren seiner Konturen zum Erzeugen expandierter Zonen;
   - eine Verfeinerungsphase (P4), in der die Verarbeitungseinheit (11) jeden Bildpunkt in einen der drei Sätze klassifiziert:

      • einen Satz von unsicheren Punkten (U), die solche Punkte des Bildes enthalten, für die es nicht möglich ist, festzulegen, ob sie zur ausgewählten Zone gehören, basierend auf einem Vergleich zwischen den Punkten, die zur ersten Zone gehören und solchen, die zur expandierten Zone gehören,
      • ein Satz unausgewählter Punkte (B) basierend darauf, ob die Punkte des Bilds zur expandierten Zone gehören, und
      • einen Satz von ausgewählten Punkten (F) basierend darauf, ob die Punkte des Bildes zur ersten Zone gehören;

   - eine Grafikverarbeitungsphase, in der die Verarbeitungseinheit (11) die Sätze unsicherer Punkte (U), unausgewählter Punkte (B) und ausgewählter Punkte (F) in Form eines gewichteten Graphen (GR) darstellt, wobei jeder Knoten des gewichteten Graphen (GR) einen der Punkte des Bildes, das in die drei Sätze (F, U, B) klassifiziert ist, darstellt, jeder Bogen des gewichteten Graphen (GR) einen Knoten mit seinem Nachbar verbindet und jede Gewichtung des gewichteten Graphen (GR) die Gleichartigkeit zwischen den zwei Knoten, die dadurch verbunden sind, darstellt, und wobei die Verarbeitungseinheit (11) ein Grafikschnittverfahren anwendet, um die unsicheren Punkte vom Satz der unsicheren Punkte (U) zum Satz der unausgewählten Punkte (B) oder zum Satz der ausgewählten Punkte (F) zu bewegen, um dadurch ein Entfernen des Satzes der unsicheren Punkte (U) und eine Komplettierung der Bildsegmentierung zu erlauben.

9. Verfahren nach Anspruch 8, ferner umfassend

   - eine Analysephase (P2), in der die Verarbeitungseinheit (11) das Ergebnis der Vorsegmentierungsphase (P1) analysiert und eine Auswahl ausführt, durch Verwenden des verbundenen Komponentenanalyseverfahrens (CCA) eines zweiten Satzes von Zonen des Bildes, wobei der zweite Satz und/oder die Zonen, die in dem zweiten Satz enthalten sind, eine geringere Größe in numerischer Hinsicht oder Flächenhinsicht enthalten als der erste Satz oder als die Zonen, die im ersten Satz, der im Vorsegmentierungsschritt (P1) ausgewählt wurde, enthalten sind, um die Wahrscheinlichkeit zu reduzieren, dass die Verarbeitungseinheit (11) falsche Positive erzeugt, nämlich Punkte des Bildes, die, obwohl sie während der Vorsegmentierungsphase (P1) ausgewählt wurden, nicht tatsächlich zur Zone des ausgewählten Bildes gehören;

   und wobei die Verarbeitungseinheit (11) morphologisch während der morphologischen Dilationsphase (P3) auch jede der zweiten Sätze von Zonen erweitert und diese in die expandierten Zonen einfügt.

10. Verfahren nach Anspruch 8 oder 9, wobei während der Vorsegmentierungsphase (P1) die Verarbeitungseinheit (11) die Punkte, die zum ersten Satz von Zonen des Bildes gehören, in einem Speichermittel (12) in Form einer Bitmaske ($\Omega$) speichert, die die gleichen Dimensionen wie das Bild aufweist, wobei die Elemente der Maske auf den logischen Wert 1 gesetzt werden, wenn erwartet wird, dass der entsprechende Punkt zur Zone des ausgewählten Bildes gehört.

11. Verfahren nach Anspruch 10, wobei die Verarbeitungseinheit (11) die expandierten Zonen durch Erweiterung der

Bitmaske ($\Omega$) durch einen Kern (E) erzeugt, der eine binäre Maske ist und vorzugsweise eine kreuzartige Form aufweist, sodass die expandierten Zonen eine expandierte Bitmaske ($\Omega_{dil}$) bilden, und wobei das Verarbeitungsmittel (11) die Maske unsicherer Punkte (U) als eine binäre Differenz zwischen jedem Element der expandierten Bitmaske ($\Omega_{dil}$) und dem entsprechenden Element in der Bitmaske ($\Omega$) berechnet, nämlich als logische UND-Operation zwischen jedem Element der expandierten Bitmaske ($\Omega_{dil}$) und dem entsprechenden negativen Element der Bitmaske ($\Omega$).

12. Verfahren nach Anspruch 10, wobei die Verarbeitungseinheit (11) die Maske der unausgewählten Punkte (B) durch Anwenden der logischen Negationsoperation (NOT) auf jedes Element der expandierten Maske ($\Omega_{dil}$) berechnet, nämlich das Bringen der Bits, die einen logischen Wert von 0 haben, auf einen logischen Wert von 1 und der Bits, die einen logischen Wert von 1 haben, auf einen logischen Wert von 0.

13. Verfahren nach Anspruch 10, wobei die Verarbeitungseinheit (11) den Satz von ausgewählten Punkten (F) durch Setzen des logischen Werts 1 nur für die Punkte des Satzes, deren entsprechendes Element der Bitmaske ($\Omega$) auf 1 gesetzt ist, berechnet.

14. Verfahren nach Anspruch 9, wobei während der Analysephase (P2) die Verarbeitungseinheit von der Bitmaske ($\Omega$) die Elemente entfernt, die denen entsprechen, die mit Komponenten, die kleinere Dimensionen als ein vorbestimmter Schwellenwert haben, verbunden sind.

15. Verfahren nach Anspruch 8, wobei die Auswahlinformationen außerdem Punkte des Bildes umfassen, die in einer vorbestimmten Entfernung von den Auswahlpunkten angeordnet sind.

16. Verfahren nach Anspruch 8, wobei die Auswahlinformationen die Auswahl von Punkten erlauben, die unterschiedliche Farben haben, und wobei während der Vorsegmentierungsphase (P1) ein Gaußsches Mischmodell für jede Farbe generiert wird.

17. Verfahren nach einem der Ansprüche 8 bis 16, wobei die Phasen des Verfahrens in einer überlappenden sequentiellen Weise ausgeführt werden, im Sinne, dass das Verarbeitungsmittel (11) bereits die Ausführung einer neuen Phase des Verfahrens beginnt, wenn gerade nur ein Teil des Ergebnisses einer vorhergehenden Phase des Verfahrens verfügbar und final ist.

18. Computerprogrammprodukt, das in einen Speicher eines elektronischen Computers geladen werden kann und das Teile von Softwarecode zum Ausführen der Phasen des Verfahrens nach einem der Ansprüche 8 bis 17 umfasst.

19. Verfahren zur Bildkodierung, umfassend einen Segmentierungsschritt, wobei ein Bild in einen Satz von verbundenen Pixelregionen, die einen bestimmten Grad einer Homogenität aufweisen, segmentiert wird, wobei der Segmentierungsschritt mittels eines Verfahrens zur Bildsegmentierung nach einem der Ansprüche 8 bis 17 ausgeführt wird.

**Revendications**

1. Appareil de traitement d'images (1) pour sélectionner des zones d'une image par segmentation, lesdites zones contenant des ensembles de points d'image, comprenant

    - au moins une unité de traitement (11) configurée pour lire au moins des données qui encodent une image,
    - un moyen de mémoire (12) en communication par signal avec l'unité de traitement (11), contenant au moins une partie des données qui encodent ladite image,
    - un moyen d'entrée (13) en communication par signal avec l'unité de traitement (11), configuré pour acquérir des informations de sélection sur des points de l'image à sélectionner,

    dans lequel le moyen d'entrée (13) est configuré pour acquérir, auprès d'un utilisateur, les informations de sélection spécifiant les caractéristiques que les zones de l'image à sélectionner doivent avoir,
    **caractérisé en ce que**
    l'unité de traitement (11) est configurée pour réaliser les étapes suivantes :

    - une étape de pré-segmentation (P1), dans laquelle l'unité de traitement (11) génère un modèle, de préférence un modèle de mélange gaussien (GMM), sur la base des informations de sélection acquises par le moyen d'entrée (13), et dans laquelle le moyen de traitement (11) sélectionne un premier ensemble de zones de l'image sur la base dudit modèle;

- une étape de dilatation morphologique (P3), dans laquelle l'unité de traitement (11) dilate morphologiquement chacune des zones contenues dans l'ensemble généré lors de la phase de pré-segmentation (P1) en dilatant ses contours pour générer des zones dilatées ;

- une étape d'affinement (P4), dans laquelle l'unité de traitement (11) classe chaque point de l'image dans un de trois ensembles :

  • un ensemble de points d'incertitude (U) contenant les points de l'image pour lesquels il n'est pas possible de déterminer s'ils appartiennent ou non aux zones à sélectionner, sur la base d'une comparaison entre les points appartenant auxdites premières zones et ceux appartenant auxdites zones dilatées,
  • un ensemble de points non sélectionnés (B) sur la base de l'appartenance ou non des points de l'image auxdites zones dilatées, et
  • un ensemble de points sélectionnés (F) sur la base de l'appartenance ou non des points de l'image auxdites premières zones ;

- une étape de traitement de graphique, dans laquelle l'unité de traitement (11) représente lesdits ensembles de points d'incertitude (U), de points non sélectionnés (B) et de points sélectionnés (F) sous la forme d'un graphique pondéré (GR), dans lequel chaque noeud dudit graphique pondéré (GR) représente un des points de l'image classés dans lesdits trois ensembles (F, U, B), chaque arc dudit graphique pondéré (GR) relie un noeud à ses voisins et chaque pondération dudit graphique pondéré (GR) représente la similitude entre les deux noeuds reliés par celui-ci, et dans lequel ladite unité de traitement (11) applique une méthode de découpage graphique pour faire passer les points d'incertitude de l'ensemble de points d'incertitude (U) à l'ensemble de points non sélectionnés (B) ou à l'ensemble de points sélectionnés (F), permettant ainsi la suppression de l'ensemble de points d'incertitude (U) et l'achèvement de la segmentation de l'image.

2. Appareil selon la revendication 1, dans lequel ladite unité de traitement (11) est configurée pour réaliser

   - une étape d'analyse (P2), dans laquelle l'unité de traitement (11) analyse les résultats de l'étape de pré-segmentation (P1) et fait une sélection, en utilisant la méthode d'analyse des composantes connectées (CCA), d'un deuxième ensemble de zones de l'image, dans lequel ledit deuxième ensemble et/ou les zones contenues dans ledit deuxième ensemble ont une plus petite taille, en termes de nombre ou de surface, que le premier ensemble ou que les zones contenues dans ledit premier ensemble sélectionnées lors de l'étape de pré-segmentation (P1), de façon à réduire la probabilité que l'unité de traitement (11) produise des faux positifs, à savoir des points de l'image qui, bien qu'ayant été sélectionnés pendant l'étape de pré-segmentation (P1), n'appartiennent en fait pas aux zones de l'image à sélectionner ;

   et dans lequel, pendant ladite étape de dilatation morphologique (P3), l'unité de traitement (11) dilate morphologiquement également chacune des zones dudit deuxième ensemble de zones et les inclut dans lesdites zones dilatées.

3. Appareil selon la revendication 1 ou 2, dans lequel, pendant ladite étape de pré-segmentation (P1), ladite unité de traitement (11) enregistre les points appartenant au premier ensemble de zones de l'image dans un moyen de mémoire (12) sous la forme d'un masque de bits ($\Omega$) ayant les mêmes dimensions que l'image, les éléments du masque étant réglés sur la valeur logique 1 si les points correspondants sont estimés appartenir aux zones de l'image à sélectionner.

4. Appareil selon la revendication 3, dans lequel l'unité de traitement (11) génère les zones dilatées en dilatant ledit masque de bits ($\Omega$) au moyen d'un noyau (E), qui est un masque binaire, ayant de préférence une forme de croix, de sorte que lesdites zones dilatées forment un masque de bits dilaté ($\Omega_{dil}$), et dans lequel le moyen de traitement (11) calcule ledit masque de points d'incertitude (U) par une différence binaire entre chaque élément du masque de bits dilaté ($\Omega_{dil}$) et l'élément correspondant contenu dans le masque de bits ($\Omega$), à savoir par une opération logique ET entre chaque élément du masque de bits dilaté ($\Omega_{dil}$) et l'élément complémenté correspondant du masque de bits ($\Omega$).

5. Appareil selon la revendication 3, dans lequel l'unité de traitement (11) calcule ledit masque de points non sélectionnés (B) en appliquant l'opération logique de complémentation (NOT) à chaque élément du masque dilaté ($\Omega_{dil}$), à savoir en amenant les bits ayant une valeur logique de 0 à une valeur logique de 1, et les bits ayant une valeur logique de 1 à une valeur logique de 0.

**6.** Appareil selon la revendication 3, dans lequel l'unité de traitement (11) calcule ledit ensemble de points sélectionnés (F) en réglant sur la valeur logique 1 uniquement les points de l'ensemble dont les éléments correspondants dudit masque de bits (Ω) sont réglés sur 1.

**7.** Appareil selon la revendication 2, dans lequel, pendant l'étape d'analyse (P2), l'unité de traitement (11) supprime du masque de bits (Ω) les éléments correspondant aux composantes connectées ayant des dimensions inférieures à une valeur seuil prédéterminée.

**8.** Procédé pour sélectionner des zones d'une image par segmentation, lesdites zones contenant des ensembles de points d'image, le procédé comprenant

- une phase d'entrée (P0) pour acquérir, auprès d'un utilisateur, au moyen d'un moyen d'entrée (13), les informations de sélection spécifiant les caractéristiques que les zones de l'image à sélectionner doivent avoir ;

**caractérisé en ce que**
le procédé comprend également

- une phase de pré-segmentation (P1), dans laquelle un moyen de traitement (11) génère un modèle, de préférence un modèle de mélange gaussien (GMM), sur la base des informations de sélection acquises lors de la phase d'entrée (P0), et dans laquelle le moyen de traitement (11) sélectionne un premier ensemble de zones de l'image sur la base dudit modèle ;
- une phase de dilatation morphologique (P3), dans laquelle le moyen de traitement (11) dilate morphologiquement chacune des zones contenues dans l'ensemble généré lors de la phase de pré-segmentation (P1) en dilatant ses contours pour générer des zones dilatées ;
- une phase d'affinement (P4), dans laquelle le moyen de traitement (11) classe chaque point de l'image dans un de trois ensembles :

• un ensemble de points d'incertitude (U) contenant les points de l'image pour lesquels il n'est pas possible de déterminer s'ils appartiennent ou non aux zones à sélectionner, sur la base d'une comparaison entre les points appartenant auxdites premières zones et ceux appartenant auxdites zones dilatées,
• un ensemble de points non sélectionnés (B) sur la base de l'appartenance ou non des points de l'image auxdites zones dilatées, et
• un ensemble de points sélectionnés (F) sur la base de l'appartenance ou non des points de l'image auxdites premières zones ;

- une phase de traitement de graphique, dans laquelle le moyen de traitement (11) représente lesdits ensembles de points d'incertitude (U), de points non sélectionnés (B) et de points sélectionnés (F) sous la forme d'un graphique pondéré (GR), dans lequel chaque noeud dudit graphique pondéré (GR) représente un des points de l'image classés dans lesdits trois ensembles (F, U, B), chaque arc dudit graphique pondéré (GR) relie un noeud à ses voisins et chaque pondération dudit graphique pondéré (GR) représente la similitude entre les deux noeuds reliés par celui-ci, et ledit moyen de traitement (11) applique une méthode de découpage graphique pour faire passer les points d'incertitude de l'ensemble de points d'incertitude (U) à l'ensemble de points non sélectionnés (B) ou à l'ensemble de points sélectionnés (F), permettant ainsi la suppression de l'ensemble de points d'incertitude (U) et l'achèvement de la segmentation de l'image.

**9.** Procédé selon la revendication 8, comprenant en outre

- une phase d'analyse (P2), dans laquelle le moyen de traitement (11) analyse les résultats de la phase de pré-segmentation (P1) et fait une sélection, en utilisant la méthode d'analyse des composantes connectées (CCA), d'un deuxième ensemble de zones de l'image, dans lequel ledit deuxième ensemble et/ou les zones contenues dans ledit deuxième ensemble ont une plus petite taille, en termes de nombre ou de surface, que le premier ensemble ou que les zones contenues dans ledit premier ensemble sélectionnées lors de la phase de pré-segmentation (P1), de façon à réduire la probabilité que le moyen de traitement (11) produise des faux positifs, à savoir des points de l'image qui, bien qu'ayant été sélectionnés pendant la phase de pré-segmentation (P1), n'appartiennent en fait pas aux zones de l'image à sélectionner,

et dans lequel, pendant ladite phase de dilatation morphologique (P3), le moyen de traitement (11) dilate morphologiquement également chacune des zones dudit deuxième ensemble de zones et les inclut dans lesdites zones dilatées.

10. Procédé selon la revendication 8 ou 9, dans lequel, pendant ladite phase de pré-segmentation (P1), ladite unité de traitement (11) enregistre les points appartenant au premier ensemble de zones de l'image dans un moyen de mémoire (12) sous la forme d'un masque de bits ($\Omega$) ayant les mêmes dimensions que l'image, les éléments du masque étant réglés sur la valeur logique 1 si les points correspondants sont estimés appartenir aux zones de l'image à sélectionner.

11. Procédé selon la revendication 10, dans lequel l'unité de traitement (11) génère les zones dilatées en dilatant ledit masque de bits ($\Omega$) au moyen d'un noyau (E), qui est un masque binaire, ayant de préférence une forme de croix, de sorte que lesdites zones dilatées forment un masque de bits dilaté ($\Omega_{dil}$), et dans lequel le moyen de traitement (11) calcule ledit masque de points d'incertitude (U) par une différence binaire entre chaque élément du masque de bits dilaté ($\Omega_{dil}$) et l'élément correspondant contenu dans le masque de bits ($\Omega$), à savoir par une opération logique ET entre chaque élément du masque de bits dilaté ($\Omega_{dil}$) et l'élément complémenté correspondant du masque de bits ($\Omega$).

12. Procédé selon la revendication 10, dans lequel l'unité de traitement (11) calcule ledit masque de points non sélectionnés (B) en appliquant l'opération logique de complémentation (NOT) à chaque élément du masque dilaté ($\Omega_{dil}$), à savoir en amenant les bits ayant une valeur logique de 0 à une valeur logique de 1, et les bits ayant une valeur logique de 1 à une valeur logique de 0.

13. Procédé selon la revendication 10, dans lequel l'unité de traitement (11) calcule ledit ensemble de points sélectionnés (F) en réglant sur la valeur logique 1 uniquement les points de l'ensemble dont les éléments correspondants dudit masque de bits ($\Omega$) sont réglés sur 1.

14. Procédé selon la revendication 9, dans lequel, pendant l'étape d'analyse (P2), l'unité de traitement (11) supprime du masque de bits ($\Omega$) les éléments correspondant aux composantes connectées ayant des dimensions inférieures à une valeur seuil prédéterminée.

15. Procédé selon la revendication 8, dans lequel les informations de sélection comprennent également des points de l'image qui sont situés à une distance prédéterminée des points de sélection.

16. Procédé selon la revendication 8, dans lequel les informations de sélection permettent de sélectionner des points ayant différentes couleurs, et dans lequel, pendant la phase de pré-segmentation (P1), un modèle de mélange gaussien est généré pour chaque couleur.

17. Procédé selon l'une quelconque des revendications 8 à 16, dans lequel lesdites phases du procédé sont réalisées d'une façon séquentielle avec chevauchement, à savoir que le moyen de traitement (11) commence déjà l'exécution d'une nouvelle phase du procédé alors qu'à peine une partie des résultats d'une phase précédente du procédé est disponible et finale.

18. Programme informatique qui peut être chargé dans la mémoire d'un ordinateur électronique et qui comprend des parties de code logiciel pour exécuter les phases du procédé selon l'une quelconque des revendications 8 à 17.

19. Procédé d'encodage d'image, comprenant une étape de segmentation dans laquelle une image est segmentée en un ensemble de régions de pixels connectées ayant un certain degré d'homogénéité, dans lequel ladite étape de segmentation est réalisée au moyen d'un procédé de segmentation d'image selon l'une quelconque des revendications 8 à 17.

Fig. 1

EP 3 018 626 B1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8478034 B2
- CA 2886092 A1

### Non-patent literature cited in the description

- A novel graph cuts based liver segmentation method. **YANG, HONGZHE et al.** Medical Image Analysis and Clinical Applications (MIACA), 2010 International Conference on. IEEE, 2010, 50-53
- **ACHANTA, RADHAKRISHNA et al.** SLIC superpixels compared to state-of-the-art superpixel methods. *Pattern Analysis and Machine Intelligence, IEEE Transactions on 34.11,* 2012, 2274-2282
- **A.P. DEMPSTER et al.** Maximum likelihood from incomplete data via the em algorithm. *Journal of the Royal Statistical Society,* 1977, 1-38
- **L.P. HANSEN.** Large sample properties of generalized method of moments estimators. *Econometrica: Journal of the Econometric Society,* 1982, 1029-1054
- M. U. M. S. O. Statistics. **C.J. GEYER.** Markov Chain Monte Carlo Maximum Likelihood. Defense Technical Information Center, 1992
- **R. J. A. LITTLE ; D. B. RUBIN.** Statistical Analysis with Missing Data. Wiley Series in Probability and Statistics, Wiley, 1987
- **J. RISSANEN.** A universal prior for integers and estimation by minimum description length. *The Annals of Statistics,* 1983, vol. 11 (2), 416-431
- **P.C. MAHALANOBIS.** On the generalised distance in statistics. *Proceedings National Institute of Science, India,* 1936, vol. 2 (1), 49-55
- **C. ROTHER ; V. KOLMOGOROV ; A. BLAKE.** GrabCut'': Interactive Foreground Extraction Using Iterated Graph Cuts. *ACM Trans. Graph.,* 2004, vol. 23 (3), 309-314